# EUROPÄISCHE PATENTANMELDUNG

(11) **EP 4 036 438 A1**
(43) Veröffentlichungstag der Anmeldung: **03.08.2022**
(21) Anmeldenummer: 22153807.7
(22) Anmeldetag: 28.01.2022
(51) Int. Cl.: F16F 15/28, F16C 3/20

(54) **KURBELWELLE MIT MINDESTENS EINEM GEGENGEWICHT**

(30) Priorität: 02.02.2021 DE 202021100494 U
(71) Anmelder: Liebherr-Components Colmar SAS, 68025 Colmar Cedex (FR)
(72) Erfinder: MOKDAD, Béchir, 68320 Jebsheim (FR); ROGARD, Yves-Antoine, 68150 Ribeauvillé (FR)
(74) Vertreter: Behr, Wolfgang

(57) **Zusammenfassung**

Die vorliegende Erfindung zeigt eine Kurbelwelle mit mindestens einem Gegengewicht, welches mit der Kurbelwelle bevorzugt über mindestens zwei Schrauben verschraubt ist, wobei das Gegengewicht eine Anlagefläche aufweist, mit welcher es an einer Gegenanlagefläche der Kurbelwelle anliegt. Dabei ist die Position des Gegengewichtes an der Kurbelwelle über mindestens ein von der Verschraubung unabhängiges Positionierelement festgelegt.

## Beschreibung

Die vorliegende Erfindung betrifft eine Kurbelwelle mit mindestens einem Gegengewicht, welches mit der Kurbelwelle über mindestens zwei Schrauben verschraubt ist, wobei das Gegengewicht eine Anlagefläche aufweist, mit welcher es an einer Gegenanlagefläche der Kurbelwelle anliegt.

Die an der Kurbelwelle angeordneten Gegengewichte dienen dazu, die statischen oder dynamischen Momente der Kurbeln auszugleichen. Die Masse der Gegengewichte sollte daher möglich weit von der Achse der Kurbelwelle angeordnet sein, um mit möglich kleinen Massen möglich große Ausgleichsmomente zu erzielen. Allerdings ist Form der Gegengewichte durch Störkonturen, welche durch andere Bauteile des Motors gebildet werden, beschränkt.

Zum einen kann dabei die der Kurbelwelle zugewandte Unterkante der Zylinder eine solche Störkontur bilden. Diese beschränkt die Form der Gegengewichte dahingehend, dass diese an der Kurbelwelle innerhalb einer Kreisscheibe, deren Mittelpunkt von der Kurbelwelle gebildet ist, und deren Radius durch den Abstand der Unterkante der Zylinder zur Achse der Kurbelwelle definiert ist, angeordnet sein müssen.

Zum anderen kann jedoch auch der Kolben, reicht seine Unterkante im unteren Totpunkt unter die Unterkante des Zylinders, eine zusätzliche Störkontur bilden. Der Abstand dieser zusätzlichen Störkontur von der Achse der Kurbelwelle hängt jedoch von der Winkelstellung der Kurbelwelle ab, da der Kolben sich bei einer Position vor oder nach dem Totpunkt wieder nach oben in den Zylinder hinein bewegt.

In vielen KonFig.ationen ist das Gegengewicht so an der Kurbelwange angeordnet, dass der Kolben in seinem unteren Totpunkt unmittelbar über der Mitte des Gegengewichts steht und für diese daher in seiner am weitesten nach unten reichenden Stellung die relevante Störkontur darstellt. Bei einer Position des Kolbens vor oder nach dem Totpunkt steht dagegen auch das Gegengewicht mit einem neben seiner Mitte angeordneten Punkt direkt unter dem Kolben, so dass der Kolben nun für diesen Punkt am Außenumfang des Gegengewichts mit seiner dortigen Position die relevante Störkontur bildet. Da der Kolben hier schon wieder etwas in den Zylinder hinein geschoben wurde, liegt die Störkontur für diesen Punkt am Außenumfang des Gegengewichts daher schon weiter von der Achse der Kurbelwelle weg als in der Mitte des Gegengewichts.

Es wurde daher schon sehr früh erkannt, dass der Außenumfang der Gegengewichte, stellt auch die Unterkante des Kolbens eine relevante Störkontur dar, sich nicht kreisförmig um die Achse der Kurbelwelle erstrecken muss, um die Störkontur zu vermeiden, sondern von einer Mitte des Gegengewichts ausgehend einen größer werdenden Abstand zur Achse der Kurbelwelle aufweisen kann. Wird dieser Effekt ausgenutzt, kann die Masse des Gegengewichts möglichst weit weg von der Achse angeordnet werden, ohne mit einer Störkontur zu kollidieren.

So verwendet die US 2,838,941, eine Druckschrift aus dem Jahr 1953, eine äußere Form des Gegengewichts, die nicht kreisförmig ist. Dabei lehrt das Dokument, eine Außenkontur des Gegengewichts zu verwenden, die so beschaffen ist, dass der Abstand zwischen dem Kolben und der Außenkontur im Wesentlichen konstant bleibt, wenn das Gegengewicht den Kolben passiert. Die Außenkontur erstreckt sich hier daher in gleichem Maße weiter von der Achse der Kurbelwelle weg wie sich der Kolben wieder vom Gegengewicht wegbewegt, sobald er den unteren Totpunkt überschritten hat.

Die Druckschrift JP 570 01 846 A aus dem Jahr 1982 basiert auf der gleichen Idee wie die US 2.838.941, beschreibt jedoch eine Situation, in der für einen mittleren Teil des Umfangs des Gegengewichts der Kolben die relevante Beschränkung darstellt, während für die seitlichen Bereiche das Kurbelgehäuse die Störkontur bildet. Daher wird ein abgeflachter Mittelabschnitt verwendet, für welchen der Kolben die relevante Beschränkung ist, und kreisförmige Seitenabschnitte, deren Zentrum sich auf der Drehachse der Kurbelwelle befindet, und für welche das Gehäuse die Beschränkung darstellt.

Die Druckschrift EP 1 124 066 A1 aus dem Jahr 2001 beschreibt im Wesentlichen die gleiche Erfindung wie die US 2,838,941.

Die WO 2008/015532 A2, ein Dokument aus dem Jahr 2006, beschreibt wiederum die gleiche Erfindung wie die US 2.838.941. Sie diskutiert hierbei im Detail die sich durch die unterschiedlichen Störkonturen ergebenden Einschränkungen und beschreibt unterschiedliche Formen für den Außenumfang der Gegengewichte, welche nur dadurch beschränkt sind, dass sie sich innerhalb eines durch alle relevanten Störkonturen definierten Bereichs befinden müssen. So wird beispielsweise ein Gegengewicht mit einem teilkreisbogenförmigen Außenumfang beschrieben, dessen Mittelpunkt auf einer Linie zwischen der Achse der Kurbelwelle und der Achse des Kurbelzapfens angeordnet ist. Weiterhin wird eine weitere Ausführungsform beschrieben, bei der der Außenumfang im Wesentlichen einer Linie folgt, die durch einen konstanten Abstand zum Kolben definiert ist, und hierdurch eine Ellipse bildet.

Die Druckschriften EP 2 772 654 B1 und DE 10 2013 203 560 B4 zeigen ebenfalls entsprechende Gegengewichte, wobei die EP 2 772 654 B1 auf eine Ausgestaltung gemäß der ersten oben erwähnten Ausgestaltung der WO 2008/015532 A2 gerichtet ist, die DE 10 2013 203 560 B4 auf eine Ausgestaltung gemäß der zweiten oben erwähnten Ausgestaltung der WO 2008/015532 A2.

Dabei sei darauf hingewiesen, dass in der US 2,838,941 die Achse der Kurbelwelle neben einer durch die Mittelachse der Zylinder definierten Ebene angeordnet ist, wie dies bei V-Motoren teilweise vorgesehen ist. Hierdurch ist auch das Gegengewicht nicht symmetrisch in Bezug auf die durch die Achse des Kurbelzapfens und der Kurbelwelle definierte Ebene angeordnet, sondern gegenüber diesen um einen Winkelversatz gedreht. Bei den übrigen Dokumenten ist das Gegengewicht dagegen symmetrisch in Bezug auf die durch die Achse des Kurbelzapfens und der Kurbelwelle definierte Ebene angeordnet. Für die Ausgestaltung des Gegengewichts ist dieser Unterscheid jedoch ohne Bedeutung.

Die oben diskutierten Druckschriften zeigen jeweils einstückig mit der Kurbelwelle geschmiedete Gegengewichte. Für mit der Kurbelwelle verschraubte Gegengewichte gilt jedoch nichts anderes, da die geometrischen Beschränkungen dieselben sind wie für geschmiedete Gegengewichte. Der einzige Unterschied besteht bei verschraubten Gegengewichten daher darin, dass am Außenumfang innerhalb des konvex gekrümmten Bereichs eine oder mehrere Aussparungen für die Köpfe der Schrauben, mit welchen das jeweilige Gegengewicht mit der Kurbelwelle verschraubt ist, vorgesehen sind.

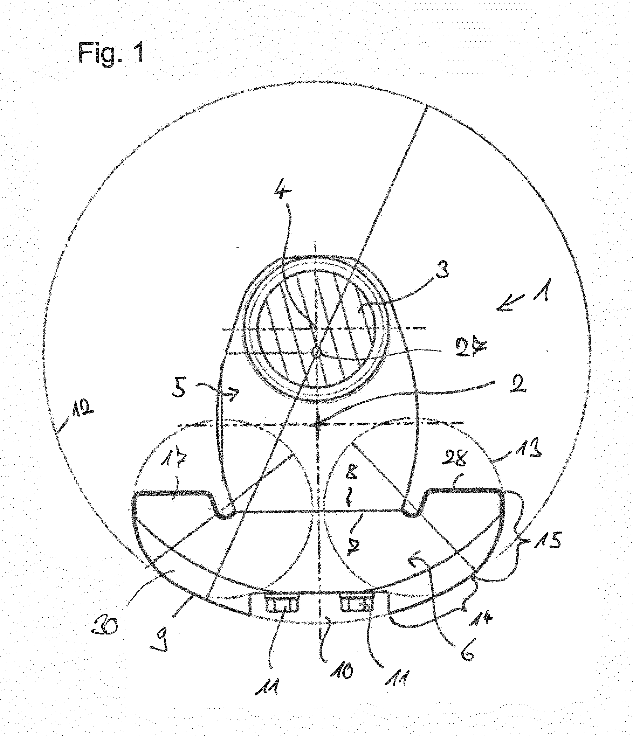

Ein solches Gegengewicht ist in Fig. 1 dargestellt. Es weist dabei einen Außenumfang auf, in dessen mittleren Bereich eine Aussparung für die Köpfe der beiden Schrauben, mit welcher das Gegengewicht an der Kurbelwelle verschraubt wird, vorgesehen ist. Auf beiden Seiten der Aussparung schließt sich ein erster teilkreisbogenförmiger Bereich an, dessen Mittelpunkt auf einer Linie zwischen der Achse der Kurbelwelle und der Achse des Kurbelzapfens angeordnet ist, wie dies aus dem ersten oben genannten Ausführungsbeispiel der WO 2008/015532 A2 bekannt ist. Nach außen hin schließen sich dann jeweils zweite teilkreisbogenförmige Bereiche an, deren Radius deutlich kleiner ist, wobei der Mittelpunkt dieser teilkreisbogenförmigen Bereiche jeweils in einem Bereich zwischen der Achse der Kurbelwelle und dem Außenumfang des Gegengewichts angeordnet ist und in etwa der Hälfte des Abstands des Außenumfangs von der Achse der Kurbelwelle beträgt.

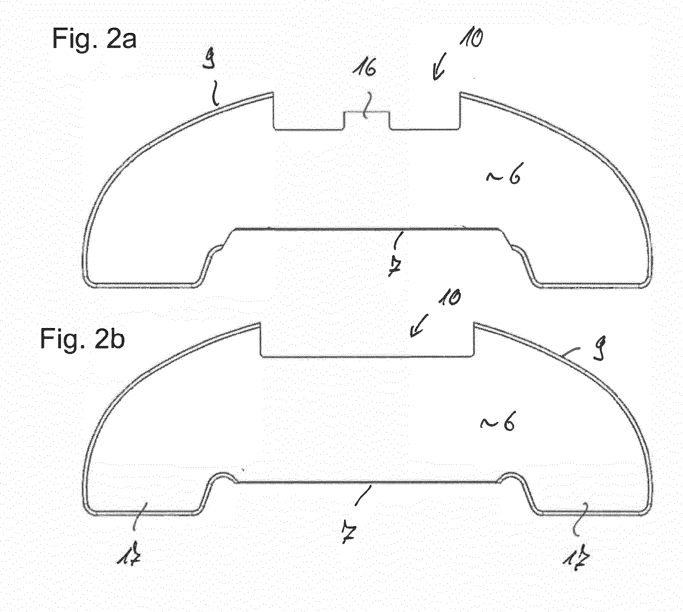

Wie in Fig. 2 in der oberen Darstellung gezeigt kann in einer alternativen Ausgestaltung innerhalb der Aussparung für die Köpfe der beiden Schrauben zwischen den beiden Schrauben eine Erhöhung vorgesehen sein, welche im Prinzip bis an den Radius des ersten teilkreisförmigen Bereichs heranreichen könnte, im Ausführungsbeispiel aber weniger weit nach außen reicht. Die alternative Ausgestaltung entspricht in Fig. 2 zwei ansonsten identisch der in Bezug auf Fig. 1 beschriebenen Ausgestaltung, welche in Fig. 2 unten nochmals zum Vergleich wiedergegeben ist.

Weiterhin können an einer Kurbelwelle auch unterschiedliche Gegengewichte angeordnet sein, beispielweise sowohl verschraubte Gegengewichte gemäß der oberen Darstellung in Fig. 2 als auch verschraubte Gegengewichte gemäß der unteren Darstellung in Fig. 2. Beispielsweise kann ein verschraubtes Gegengewicht gemäß der oberen Darstellung in Fig. 2 für eine oder beide Kurbelwangen einer mittleren Kurbel der Kurbelwelle vorgesehen sein, und ein verschraubtes Gegengewicht gemäß der unteren Darstellung in Fig. 2 für die übrigen Kurbelwangen.

Eine Kurbelwelle gemäß dem Oberbegriff von Anspruch 1 ist auch aus der Druckschrift EP 3 614 018 A1 bekannt. Die in dieser Druckschrift beschriebenen verschraubten Gegengewichte werden jedoch an der zugehörigen Kurbelwange jeweils mit einem unterschiedlichen Winkelversatz zu einer Position gegenüber des jeweiligen Kurbelzapfens bzw. gegenüber dem Kolben angeordnet. Um dennoch für alle verschraubten Gegengewichte das gleiche Rohteil einsetzen zu können, weist der Außenumfang der dort eingesetzten verschraubten Gegengewichte daher die Form eines Kreisbogenabschnitts auf, dessen Mittelpunkt mit der Achse der Kurbelwelle übereinstimmt. Die Druckschrift verwendet an der gleichen Kurbelwelle weiterhin auch angeschmiedete Gegengewichte, welche ebenfalls an der zugehörigen Kurbelwange mit einem unterschiedlichen Winkelversatz zu einer Position gegenüber des jeweiligen Kurbelzapfens bzw. gegenüber dem Kolben angeordnet sind. Der Außenumfang dieser Gegengewichte weist jedoch jeweils einen Krümmungsradius auf, welcher kleiner ist als der Abstand des Außenumfangs zur Achse der Kurbelwelle.

Die die Form des Außenabschnitts der Gegengewichte bestimmenden Faktoren und die für diese Form möglichen Ausgestaltungen sind daher sowohl für mit der Kurbelwelle verschraubte als auch für geschmiedete Gegengewichte seit langem bestens bekannt.

Weniger Beachtung fanden bisher die Faktoren, welche für die Verbindung verschraubter Gegengewichte mit der Kurbelwelle eine Rolle spielen.

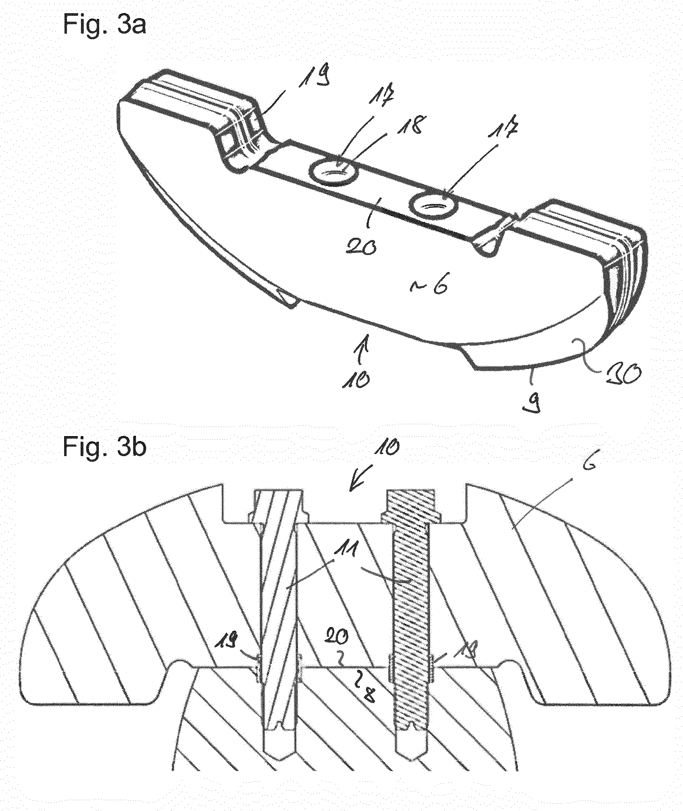

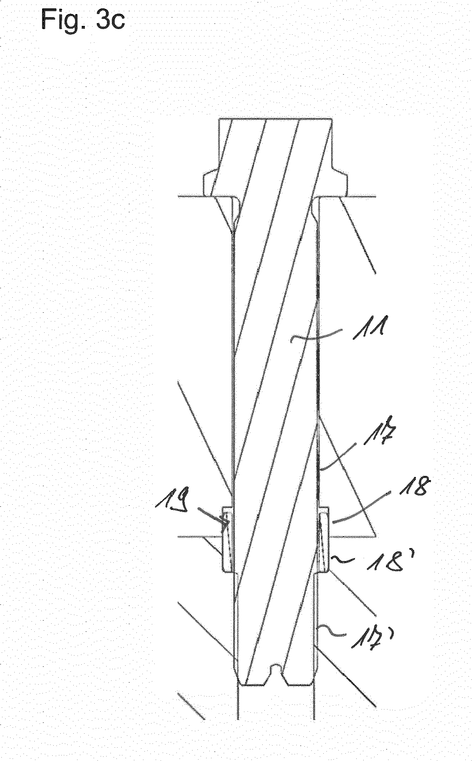

Fig. 3 zeigt dabei beispielsweise die Ausgestaltung der Anlagefläche eines Gegengewichts gemäß den Ausgestaltungen in Fig. 1 und 2, mit welcher diese an einer Gegenanlagefläche der Kurbelwelle anliegen. Hierbei ist eine zusammenhängende Anlagefläche vorgesehen, welche die beiden Bohrungen für die Schrauben umgibt. Die Bohrungen weisen dabei jeweils in ihrem unteren Bereich Zentrierbuchsen auf, durch welche die Gegengewichte in der richtigen Position an der Kurbelwelle positioniert werden.

Aufgabe der vorliegenden Erfindung ist es, die Verbindung verschraubter Gegengewichte mit der Kurbelwelle zu verbessern.

Diese Aufgabe wird durch Anspruch 1 gelöst. Bevorzugte Ausgestaltungen der vorliegenden Erfindung sind Gegenstand der Unteransprüche.

Die vorliegende Erfindung umfasst eine Kurbelwelle mit mindestens einem Gegengewicht, welches mit der Kurbelwelle verschraubt ist, wobei das Gegengewicht eine Anlagefläche aufweist, mit welcher es an einer Gegenanlagefläche der Kurbelwelle anliegt. Dabei ist vorgesehen, dass die Position des Gegengewichtes an der Kurbelwelle über mindestens ein von der Verschraubung unabhängiges Positionierelement festgelegt ist.

Diese Ausgestaltung erlaubt eine bessere Positionierung der Gegengewichte an der Kurbelwelle, da die Bohrungen für die Schrauben nun keine Doppelfunktion mehr aufweisen müssen. Vielmehr erfolgt die Positionierung über das von der Verschraubung unabhängige Positionierelement.

Bevorzugt erfolgt die Verschraubung des Gegengewichts mit der Kurbelwelle über mindestens zwei Schrauben.

In einer möglichen Ausgestaltung der vorliegenden Erfindung kann es sich bei dem Positionierelement um mindestens einen Positionierstift und eine zugehörige Positionieraussparung, in welche dieser eingreift, handeln.

In einer möglichen Ausgestaltung der vorliegenden Erfindung sind die Positionierelemente beabstandet zu der mindestens einen Verschraubung vorgesehen. Insbesondere sind der oder die Positionierstifte und/oder Positionieraussparungen beabstandet von den Schrauben und/oder Bohrungen für die Schrauben vorgesehen. Insbesondere weisen das oder die Positionierelemente in der durch die Anlagefläche definierten Ebene einen Abstand zu den Elementen der Verschraubung, insbesondere der oder den Schrauben und/oder Bohrungen für die Schrauben, auf.

In einer möglichen Ausgestaltung der vorliegenden Erfindung sind mindestens zwei Positionierelemente, insbesondere mindestens zwei Positionierstifte und zugehörige Positionieraussparungen, vorgesehen.

In einer möglichen Ausgestaltung der vorliegenden Erfindung handelt es sich bei der oder den Positionieraussparungen um Bohrungen.

In einer möglichen Ausgestaltung der vorliegenden Erfindung verläuft die Längsachse des mindestens eine Positionierelements, insbesondere des mindestens einen Positionierstifts und der zugehörigen Positionieraussparung, parallel zur Achse mindestens einer Verschraubung und/oder senkrecht zur Anlagefläche.

In einer möglichen Ausgestaltung der vorliegenden Erfindung ist vorgesehen, dass der oder die Positionierstifte in miteinander fluchtende Positionieraussparungen, insbesondere Bohrungen, im Gegengewicht und in der Kurbelwelle bzw. Kurbelwange eingreifen.

In einer möglichen Ausgestaltung der vorliegenden Erfindung ist oder sind der oder die Positionierstifte in die Positionieraussparung eingepresst. Bevorzugt sind ist oder sind der oder die Positionierstifte in miteinander fluchtende Positionieraussparungen des Gegengewichts und der Kurbelwelle bzw. Kurbelwange eingepresst.

Die Toleranzen für die Positionierstifte und die Positionieraussparungen sind bevorzugt so gewählt, dass die Positionierstifte exakt in die Positionieraussparungen passen und durch Pressitz in diesen gehalten werden.

In einer möglichen Ausgestaltung der vorliegenden Erfindung ist vorgesehen, dass ein erstes Positionierelement, insbesondere ein erster Positionierstift in einer senkrecht zur Achse der Kurbelwelle verlaufenden Mittelebene des Gegengewichts und/oder in einer durch die Längsachsen zweier Schrauben aufgespannten Verschraubungsebene des Gegengewichts angeordnet ist.

In einer möglichen Ausgestaltung der vorliegenden Erfindung ist vorgesehen, dass ein zweites Positionierelement, insbesondere ein zweiter Positionierstift axial neben einer senkrecht zur Achse der Kurbelwelle verlaufenden Mittelebene des Gegengewichts und/oder einer durch die Längsachsen zweier Schrauben aufgespannten Verschraubungsebene des Gegengewichts angeordnet ist.

In einer möglichen Ausgestaltung der vorliegenden Erfindung weisen ein erstes Positionierelement und ein zweites Positionierelement einen unterschiedlichen Abstand zu einer senkrecht zur Achse der Kurbelwelle verlaufenden, durch die Längsachsen zweier Schrauben aufgespannten Verschraubungsebene des Gegengewichts, und/oder zu einer parallel zur Achse der Kurbelwelle in gleichem Abstand mittig zwischen den Längsachsen zweier Schrauben verlaufenden Mittelebene, auf.

In einer möglichen Ausgestaltung der vorliegenden Erfindung ist vorgesehen, dass der oder die Positionierelemente, insbesondere Positionierstifte und/oder der oder die Positionieraussparungen, innerhalb der Gegenanlagefläche bzw. Anlagefläche angeordnet sind. Insbesondere können die Positionierbohrungen beanstandet zu den Bohrungen der Schrauben in der Gegenanlagefläche bzw. Anlagefläche angeordnet sein.

In einer möglichen Ausgestaltung der vorliegenden Erfindung ist vorgesehen, dass die Positionierelemente, insbesondere Positionierstifte und/oder Positionieraussparungen, jeweils einer Schraube zugeordnet sind.

In einer möglichen Ausgestaltung der vorliegenden Erfindung ist vorgesehen, dass die Positionierelemente, insbesondere Positionierstifte und/oder Positionieraussparungen weiter voneinander beabstandet als die Schrauben und bevorzugt jeweils bezüglich der Umfangsrichtung außen neben den Schrauben angeordnet sind.

Die vorliegende Erfindung umfasst in einem zweiten Aspekt eine Kurbelwelle mit mindestens einem Gegengewicht, welches mit der Kurbelwelle über mindestens zwei Schrauben verschraubt ist, wobei das Gegengewicht eine Anlagefläche aufweist, mit welcher es an einer Gegenanlagefläche der Kurbelwelle anliegt. Dabei weist die die Anlagefläche mindestens zwei voneinander getrennte Anlagebereiche auf, welche jeweils einer der beiden Schrauben zugeordnet sind.

Die Erfinder der vorliegenden Erfindung haben erkannt, dass durch die getrennten Anlagebereiche die Kraftverteilung über die Anlagefläche erheblich verbessert werden kann.

In einer möglichen Ausgestaltung der vorliegenden Erfindung ist vorgesehen, dass die Anlagebereiche jeweils eine der beiden Schrauben zumindest teilweise und bevorzugt komplett umgeben.

In einer möglichen Ausgestaltung der vorliegenden Erfindung ist vorgesehen, dass die Schrauben jeweils im Wesentlichen in der Mitte eines der Anlagebereiche angeordnet sind.

In einer möglichen Ausgestaltung der vorliegenden Erfindung ist vorgesehen, dass sich die Anlagebereiche in einer gemeinsamen Ebene erstrecken.

In einer möglichen Ausgestaltung der vorliegenden Erfindung ist vorgesehen, dass die Anlagebereiche symmetrisch bezüglich einer in axialer Richtung der Kurbelwelle verlaufenden Mittelebene des Gegengewichts angeordnet sind.

In einer möglichen Ausgestaltung der vorliegenden Erfindung ist vorgesehen, dass die Anlagebereiche eine im Wesentlichen quadratische Form aufweisen.

In einer möglichen Ausgestaltung der vorliegenden Erfindung ist vorgesehen, dass die Breite der Anlagebereiche im Wesentlichen ihrer Länge entspricht.

In einer möglichen Ausgestaltung der vorliegenden Erfindung ist vorgesehen, dass sich die Anlagebereiche über die gesamte axiale Breite des Gegengewichts erstrecken.

Der erste und der zweite Aspekt sind auch unabhängig voneinander Gegenstand der vorliegenden Erfindung.

So kann beispielsweise ein Gegengewicht gemäß dem zweiten Aspekt, welches getrennte, den jeweiligen Schrauben zugeordnete Anlagebereiche aufweist, ohne ein separates Positionierelement gemäß dem ersten Aspekt ausgestaltet sein und beispielsweise über eine in die Bohrung für die Schrauben integrierte Zentrierbuchse, wie sie oben im Hinblick auf den Stand der Technik beschrieben wurde, positioniert werden.

Weiterhin kann ein Gegengewicht gemäß dem ersten Aspekt, welches über ein separates Positionierelement positioniert wird, eine zusammenhängende Anlagefläche für die mindestens zwei und bevorzugt alle Schrauben aufweisen.

Bevorzugt kommen der erste und der zweite Aspekt jedoch in Kombination zum Einsatz.

In einer möglichen Ausgestaltung der vorliegenden Erfindung ist insbesondere vorgesehen, dass die Positionierelemente, insbesondere Positionierstifte oder Positionieraussparungen, jeweils einem der Anlagebereiche, in welche die Anlagefläche aufgeteilt ist, zugeordnet und bevorzugt in diesem angeordnet sind.

Bevorzugte Ausgestaltungen der vorliegenden Erfindung, welche sowohl beim ersten als auch beim zweiten Aspekt zum Einsatz kommen können, werden im folgenden näher beschrieben.

In einer möglichen Ausgestaltung der vorliegenden Erfindung ist vorgesehen, dass die Anlagefläche durch spanende Bearbeitung eines Rohteils erzeugt ist, wobei es sich bei dem Rohteil bevorzugt um ein Gussteil oder Schmiedeteil handelt.

In einer möglichen Ausgestaltung der vorliegenden Erfindung ist vorgesehen, dass sich die Anlagefläche in einer Ebene erstreckt, welche parallel zur Achse der Kurbelwelle verläuft und/oder senkrecht auf einer in axialer Richtung der Kurbelwelle verlaufenden Mittelebene des Gegengewichts verläuft.

Die vorliegende Erfindung kann insbesondere bei Gegengewichten mit einer Form des Außenumfangs, wie sie oben im Hinblick auf den Stand der Technik beschrieben wurde, zum Einsatz kommen.

In einer möglichen Ausgestaltung der vorliegenden Erfindung ist daher vorgesehen, dass der Außenumfang des Gegengewichts mindestens einen konvex gekrümmten Abschnitt aufweist, wobei der konvex gekrümmte Abschnitt bevorzugt symmetrisch auf beiden Seiten einer in axialer Richtung der Kurbelwelle verlaufenden Mittelebene des Gegengewichts verläuft.

In einer möglichen Ausgestaltung der vorliegenden Erfindung ist vorgesehen, dass der Abstand des Außenumfangs des Gegengewichts zur Achse der Kurbelwelle im Bereich des konvex gekrümmten Abschnitts bevorzugt von einer in axialer Richtung der Kurbelwelle verlaufenden Mittelebene des Gegengewichts nach außen hin zunimmt, wobei der konvex gekrümmte Abschnitt bevorzugt einen Mittelpunkt aufweist, welcher bezüglich der Achse der Kurbelwelle auf der dem Gegengewicht gegenüberliegenden Seite angeordnet ist.

In einer möglichen Ausgestaltung der vorliegenden Erfindung ist vorgesehen, dass innerhalb des konvex gekrümmten Abschnitts eine oder mehrere Aussparungen für die Schraubenköpfe vorgesehen sind, wobei bevorzugt die Aussparung oder Aussparungen sich über die gesamte axiale Breite des Gegengewichts erstreckt bzw. erstrecken.

In einer möglichen Ausgestaltung der vorliegenden Erfindung ist vorgesehen, dass der Krümmungsradius des konvex gekrümmten Abschnitts von einer in axialer Richtung der Kurbelwelle verlaufenden Mittelebene des Gegengewichts nach außen hin kleiner wird, wobei der konvex gekrümmte Abschnitt auf beiden Seiten der Mittelebene bevorzugt mindestens einen Abschnitt mit konstantem Krümmungsradius aufweist, wobei sich der konvex gekrümmte Abschnitt bevorzugt auf beiden Seiten der Mittelebene aus mindestens zwei Abschnitten mit konstantem Krümmungsradius zusammensetzt, wobei die Krümmungsradien der Abschnitte nach außen hin abnehmen.

In einer möglichen Ausgestaltung der vorliegenden Erfindung ist vorgesehen, dass das Gegengewicht auf seiner der Achse der Kurbelwelle zugewandten Seite auf beiden Seiten der Anlagefläche Materialbereiche aufweist, welche sich auf der der Achse zugewandten Seite einer durch die Anlagefläche definierten Ebene erstrecken.

In einer möglichen Ausgestaltung der vorliegenden Erfindung ist vorgesehen, dass die Längsachse der Schrauben senkrecht zur Anlagefläche steht und/oder wobei die Längsachsen der Schrauben parallel zueinander verlaufen.

In einer möglichen Ausgestaltung der vorliegenden Erfindung ist vorgesehen, dass das Gegengewicht über die Verschraubung starr an der Kurbelwelle angeordnet ist und/oder als einstückiges Bauteil ausgeführt ist.

In einer möglichen Ausgestaltung der vorliegenden Erfindung ist vorgesehen, dass das Gegengewicht mit einer Kurbelwange verschraubt ist, wobei das Gegengewicht bevorzugt einem an der Kurbelwange angeordneten Kurbelzapfen radial gegenüberliegt.

In einer möglichen Ausgestaltung der vorliegenden Erfindung ist vorgesehen, dass die Kurbellwelle eine Mehrzahl von Kurbeln und/oder Kurbelwangen aufweist, welchen Gegengewichte zugeordnet sind.

In einer möglichen Ausgestaltung der vorliegenden Erfindung ist vorgesehen, dass die Kurbelwelle neben verschraubten Gegengewichten auch einstückig mit der Kurbelwelle gefertigte, bevorzugt angeschmiedete Gegengewichte aufweist.

In einer möglichen Ausgestaltung handelt es sich bei der erfindungsgemäßen Kurbelwelle um eine Kurbelwelle für einen Verbrennungsmotor mit mindestens 12 Zylindern und/oder für einen V-Motor.

Die vorliegende Erfindung umfasst weiterhin ein Gegengewicht für eine Kurbelwelle, wie sie oben beschrieben wurde.

Insbesondere weist die Anlagefläche gemäß dem ersten Aspekt mindestens zwei voneinander getrennte Anlagebereiche auf, welche jeweils einer der beiden Schrauben zugeordnet sind.

Alternativ oder zusätzlich ist gemäß dem zweiten Aspekt die Position des Gegengewichtes an der Kurbelwelle über mindestens ein von der Verschraubung unabhängiges Positionierelement festgelegt. Insbesondere kann das Gegengewicht einen Positionierstift oder eine Positionieraussparung aufweisen. Weiterhin kann das mindestens eine Positionierelement beabstandet zu der mindestens einen Verschraubung vorgesehen sein. Insbesondere kann eine Positionieraussparung getrennt von einer Bohrung für eine Schraube vorgesehen sein.

Das Gegengewicht ist bevorzugt so ausgestaltet, wie dies oben im Hinblick auf die Kurbelwelle beschrieben wurde.

Die vorliegende Erfindung umfasst weiterhin einen Verbrennungsmotor mit einer Kurbelwelle, wie diese oben beschrieben wurde.

Insbesondere handelt es sich um einen Verbrennungsmotor mit mindestens 12 Zylindern und/oder einen V-Motor.

Die vorliegende Erfindung umfasst weiterhin eine Maschine mit einem Verbrennungsmotor, wie er oben beschrieben wurde.

Insbesondere kann es sich um eine mobile Maschine, insbesondere Erdbewegungsmaschine wie Bagger oder Muldenkipper, Schiff oder Eisenbahn handeln.

Alternativ kann es sich um eine stationäre Maschine, insbesondere eine Generatoreinheit zur Erzeugung von elektrischer Energie, handeln.

Die vorliegende Erfindung wird nunmehr anhand von Ausführungsbeispielen sowie Zeichnungen näher beschrieben.

Dabei zeigen:
- Fig. 1:: ein Ausführungsbeispiel einer Kurbelwelle mit mindestens einem Gegengewicht in einer Ansicht aus axialer Richtung,
- Fig. 2a und 2b:: zwei Ausführungsbeispiele von Gegengewichten,
- Fig. 3a bis 3c:: ein Ausführungsbeispiel eines Gegengewichtes gemäß dem Stand der Technik,
- Fig. 4:: ein Ausführungsbeispiel eines erfindungsgemäßen Gegengewichtes und
- Fig. 5:: das Ausführungsbeispiel gemäß Fig. 4 in einer Ansicht von unten und von der Seite und
- Fig. 6:: eine Detailansicht des Ausführungsbeispiels gemäß Fig. 4 und 5.

Fig. 1 zeigt ein Ausführungsbeispiel einer Kurbelwelle 1 mit einem Gegengewicht 6.

Die in Fig. 1 dargestellte und im Folgenden näher beschriebene Ausgestaltung der Kurbelwelle kommt dabei sowohl bei Kurbelwellen gemäß dem Stand der Technik, als auch bei Kurbelwellen gemäß der vorliegenden Erfindung zum Einsatz und wird im Folgenden daher für beide Ausgestaltungen gemeinsam dargestellt.

Die Kurbelwelle 1 weist in Fig. 1 nicht näher dargestellte Hauptlagerbereiche auf, über welche die Kurbelwelle um die Achse 2 drehbar an Hauptlagern des Motors gelagert ist. Bevorzugt sind solche Hauptlagerbereiche dabei zwischen sämtlichen Kurbeln der Kurbelwelle sowie an den beiden äußeren Enden der Kurbelwelle vorgesehen.

Die Kurbelwelle 11 umfasst weiterhin Kurbelzapfen 3, an welchen Pleuel gelagert sind, über welche die Kurbelwelle mit Kolben des Verbrennungsmotors in Verbindung steht. Die Kurbelzapfen 3 erstrecken sich dabei jeweils zwischen Kurbelwangen 5 der Kurbelwelle, welche die Kurbelzapfen 3 mit den Hauptlagerbereichen verbinden. Die Achse der Kurbelzapfen 3 ist mit "4" bezeichnet, und stellt dabei die Drehachse dar, um welche sich die Pleuel drehen.

An der Kurbelwelle sind weiterhin Gegengewichte 6 vorgesehen, welche bevorzugt an den Kurbelwangen 5 angeordnet sind. In Fig. 1 ist dabei lediglich eine einzelne Kurbelwange 5 mit einem daran angeordneten Gegengewicht 6 gezeigt.

In möglichen Ausführungsformen kann jede Kurbelwange 5 ein Gegengewicht 6 aufweisen. Alternativ können auch nur einzelne Kurbelwangen Gegengewichte 6, wie sie im folgenden näher beschrieben werden, aufweisen, während andere Kurbelwangen entweder gar keine Gegengewichte aufweisen oder anders ausgeführte Gegengewichte, beispielsweise mit der Kurbelwelle einstückig gefertigte, beispielsweise angeschmiedete Gegengewichte.

Das Gegengewicht 6 ist über Schrauben 11 mit der Kurbelwelle verschraubt. Das Gegengewicht 6 weist dabei eine Anlagefläche 7 auf, mit welcher es an einer Gegenanlagefläche 8 der Kurbelwelle anliegt. Über die Schrauben 11 werden die Anlagefläche 7 und die Anlagefläche 8 miteinander verpresst.

Im Ausführungsbeispiel ist die Gegenanlagefläche 8 an der Kurbelwange 5 angeordnet. Hierdurch ist das Gegengewicht 6 mit der Kurbelwange 5 verschraubt. Dabei gehen in Fig. 1 nicht gezeigte Bohrungen 17 durch das Gegengewicht 6 hindurch. Durch diese Bohrungen erstrecken sich die Schrauben 11 durch das Gegengewicht hindurch zur Kurbelwange 5. Die Kurbelwangen weisen entsprechende Gewindebohrungen auf, in welche die Schrauben 11 eingeschraubt sind. Die Schraubenköpfe liegen auf einer äußeren Umfangsfläche des Gegengewichts 6 auf.

Im Ausführungsbeispiel sind mehrere Schrauben 11 vorgesehen, deren Längsachsen parallel zueinander angeordnet sind. Konkret werden im Ausführungsbeispiel zwei Schrauben 11 eingesetzt.

Das Gegengewicht ist spiegel-symmetrisch bezüglich einer sich in axialer Richtung erstreckenden Symmetrie-Ebene ausgestaltet. Anlagefläche 7 und Gegenanlagefläche 8 stehen dabei senkrecht auf dieser Ebene.

Das Gegengewicht ist so an der Kurbelwelle angeordnet, dass die Achse 2 der Kurbelwelle in der Symmetrie-Ebene verläuft.

Im Ausführungsbeispiel ist das Gegengewicht 6 ohne Winkelversatz auf der dem Kurbelzapfen 3 gegenüberliegenden Seite der Kurbelwange 5 angeordnet, das heißt die Symmetrie-Ebene des Gegengewichtes 6 ist eine Ebene, welche durch die Achse 2 der Kurbelwelle und die Achse 4 des Kurbelzapfens 3 aufgespannt wird.

Der Außenumfang des Gegengewichts 6 weist eine mittig angeordnete Aussparung 10 auf, in deren Bodenbereich die Bohrungen 17 für die Schrauben angeordnet sind, wobei sich die Köpfe der Schrauben auf dem die Bohrungen 17 umgebenden Bodenbereich der Aussparung abstützen.

Der Außenumfang des Gegengewichts 6 weist weiterhin konvex gekrümmte Abschnitte 14 und 15 auf, welche sich beiderseits der Aussparung 10 für die Schrauben 11 erstrecken. In einem ersten, an die Aussparung 10 anschließenden gekrümmten Bereich 14 weist der Außenumfang einen Krümmungsradius 12 auf, dessen Mittelpunkt 27 auf der Verbindungslinie zwischen der Achse 2 der Kurbelwelle und der Achse 4 des Kurbelzapfens 3 liegt.

Im Ausführungsbeispiel liegt der Mittelpunkt 27 dabei näher an der Achse 4 des Kurbelzapfens und teilt die Strecke zwischen Achse 4 des Kurbelzapfens 3 und Achse 2 der Kurbelwelle 1 circa im Verhältnis 1:3.

Die beiden ersten Bereiche 14 erstrecken sich bezüglich der Achse 2 der Kurbelwelle jeweils über einen Winkelbereich zwischen 10 und 40 Grad, bevorzugt zwischen 15 und 30 Grad. Im Ausführungsbeispiel erstrecken sich die beiden ersten Bereiche circa zwischen einem Winkel von 20 Grad gemessen ab der Mittellinie bzw. Symmetrieebene des Gegengewichtes bis zu einem Winkel von circa 43 Grad bezüglich der Achse 2 der Kurbelwelle.

An den ersten konvex gekrümmten Bereich 14 schließt sich jeweils ein zweiter konvex gekrümmter Bereich 15 mit einem kleineren Krümmungsradius 13 an. Der Radius im zweiten Bereich 15 beträgt nur circa ein Drittel des Radius im ersten Bereich 14.

Die zweiten konvex gekrümmten Bereiche 15 bilden das äußere Ende der äußeren Umfangsfläche des Gegengewichts. Sie gehen dabei mit einem kleinen Krümmungsradius in Bereiche der inneren Umfangsfläche des Gegengewichts über, welche sich von der Anlagefläche 7 nach außen erstrecken.

Das Gegengewicht 6 weist auf beiden Seiten der Anlagefläche 7 Materialbereiche 17 auf, welche bezüglich der durch die Anlagefläche 7 definierten Ebene auf der Seite der Achse 2 angeordnet sind, das heißt näher an der Achse 2 angeordnet sind als die Ebene der Anlagefläche 7. Diese Materialbereiche 17 weisen Abschlussflächen 28 auf, welche jeweils parallel zur Anlagefläche 7 von dem äußeren Ende des zweiten Abschnittes 15 nach innen verlaufen, und an ihrem inneren Ende über gebogene Abschnitte mit der Anlagefläche 7 in Verbindung stehen.

Das Gegengewicht 6 hat damit zusammen mit der Kurbelwange 5, an welcher es angeordnet ist, eine pilzförmige Gestalt.

In Fig. 2a und 2b sind zwei unterschiedliche Ausführungsformen für Gegengewichte 6 dargestellt, welche sich lediglich im Hinblick auf die Aussparung 10 für die Schrauben 11 unterscheiden. Ansonsten entsprechen sie den in Bezug auf Fig. 1 beschriebenen Gegengewichten.

Das in Fig. 2b dargestellte Gegengewicht entspricht dabei dem in Fig. 1 dargestellten Gegengewicht, und weist eine einzige, durchgehende Aussparung mit einem parallel zur Anlagefläche 7 verlaufenden Fußbereich auf. Bei dem in Fig. 2a dargestellten Ausführungsbeispiel ist dagegen zwischen den Bereichen für die beiden Schrauben 11 eine Erhöhung 16 vorgesehen. Diese könnte im Prinzip bis zum Radius 12 reichen. Im Ausführungsbeispiel bleibt sie jedoch unterhalb des Radius.

In einem möglichen Ausführungsbeispiel können sowohl Gegengewichte gemäß Fig. 2a als auch gemäß Fig. 2b an einer einzelnen Kurbelwelle angeordnet sein. Beispielsweise können die mittig an der Kurbelwelle angeordneten Kurbeln Gegengewichte gemäß Fig. 2a, alle anderen Kurbeln Gegengewichte gemäß Fig. 2b aufweisen. Jedoch sind auch andere Mischungen und Ausgestaltungen denkbar.

In sämtlichen Ausführungsbeispielen erstreckt sich die Aussparung 10 über die gesamte axiale Breite des Gegengewichtes. Hierdurch sind die Schraubenköpfe der Schrauben 11 axial zugänglich. Bei breiteren Gegengewichten wäre es jedoch auch denkbar, dass es sich bei der Aussparung 10 beziehungsweise den entsprechenden Aussparungen für die Schraubenköpfe um Aussparungen handelt, welche sich nicht über die gesamte axiale Breite des Gegengewichtes erstrecken, sondern beispielsweise in Form von Sacklöchern in den dann durchgehenden gekrümmten Bereich eingelassen sind.

Das Gegengewicht ist dabei im wesentlichen plattenförmig ausgestaltet, wobei die Hauptebene des Gegengewichtes senkrecht auf der Achse der Kurbelwelle steht.

Wie insbesondere aus Fig. 3a ersichtlich, weist das Gegengewicht im Bereich seines konvex gekrümmten Umfanges 9 jedoch seitliche Abschrägungen 30 auf. Diese dienen dazu, Kollisionen mit Bestandteilen des Motors bei dem Pleuel, dem Kolben oder dem Zylinder zu vermeiden.

Die in Fig. 1 und 2 gezeigte Ausgestaltung der Kurbelwelle und des Gegengewichtes ist zunächst bekannt. Wie im allgemeinen Teil der Beschreibung ausführlich dargelegt, dient die Form des Gegengewichtes und insbesondere die Form des konvexen Umfangsbereichs des Gegengewichtes dazu, möglichst viel Material und damit Masse möglichst weit weg von Achse 2 der Kurbelwelle zu platzieren, ohne damit mit Störkonturen in Konflikt zu geraten. Der Radius des Abschnittes 14 kann dabei größer sein als der Abstand zur Achse 2 der Kurbelwelle, weil in diesem Bereich die relevante Störkontur durch den Kolben gebildet wird, welcher jedoch keine fixe Störkontur darstellt, sondern sich nach Erreichen des unteren Totpunktes seinerseits wieder in den Zylinder hineinbewegt und daher eine Form des Gegengewichtes erlaubt, bei welcher der Radius im Bereich 14 größer ist als der Abstand zur Kurbelwelle 2.

Die vorliegende Erfindung beschäftigt sich daher nicht mit diesen bestens bekannten Aspekten der Ausgestaltung einer Kurbelwelle, sondern vielmehr mit der konkreten Verbindung zwischen dem Gegengewicht und der Kurbelwelle. Diese erfindungsgemäße Ausgestaltung dieser Verbindung kann daher unabhängig von der Form des Gegengewichts bei allen mit der Kurbelwelle verschraubten Gegengewichten eingesetzt werden.

In Fig. 3a bis 3c ist die Verbindung mit der Kurbelwelle für ein Ausführungsbeispiel eines Gegengewichtes gemäß dem Stand der Technik gezeigt. Dieses weist eine einzige zusammenhängende Anlagefläche 20 auf, innerhalb welcher die beiden Bohrungen 17 für die Schrauben vorgesehen sind.

Zur Zentrierung des Gegengewichtes sind dabei in dem der Kurbelwange zugewandten, unteren Endabschnitt der Bohrungen 17 erweiterte Abschnitte 18 vorgesehen, in welche Zentrierhülsen 19 mit einem ersten Ende engreifen, um die Gegengewichte an der Kurbelwelle zu positionieren.

Die Kurbelwange weist ebenfalls eine zusammenhängende Gegenanlagefläche 8 auf, welche mit der Anlagefläche 20 verpresst wird.

In der Gegenanlagefläche 8 der Kurbelwelle bzw. Kurbelwange sind Bohrungen 17' vorgesehen, in welche die Schrauben 17 eingeschraubt werden, und welche mit den Bohrungen 17 des Gegengewichtes fluchten. Die dem Gegengewicht zugewandten Endabschnitte 17' weisen erweiterte Abschnitte 18' auf, welche mit den erweiterten Abschnitten 18 des Gegengewichtes fluchten und in welche die anderen Enden der Zentrierhülsen eingreifen.

Die Zentrierhülsen 19 sind mit ihrem Außenumfang in die erweiterten Abschnitte 18 und 18' eingepresst. Sie umgeben die Schrauben 11, wobei zwischen ihrem Innenumfang und dem Außenumfang der Schrauben ein Spalt verbleibt.

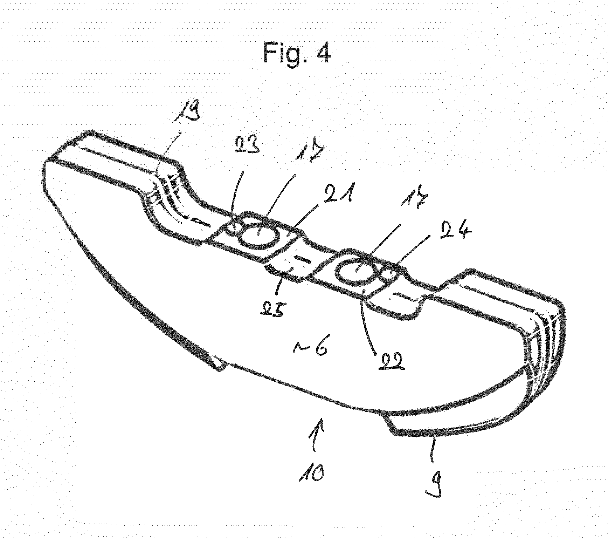

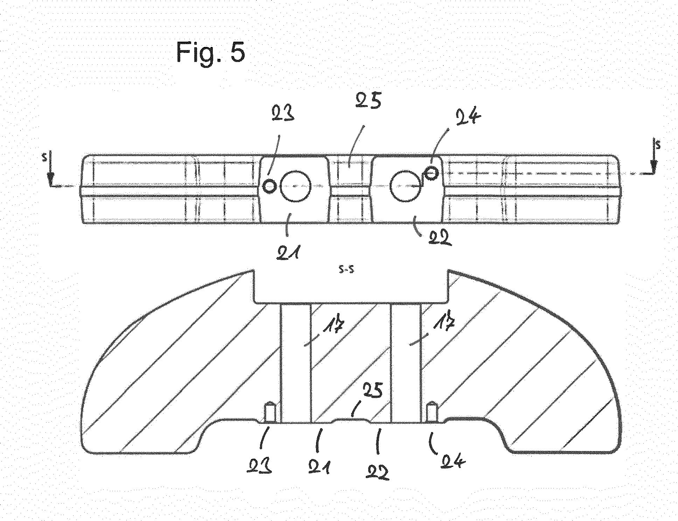

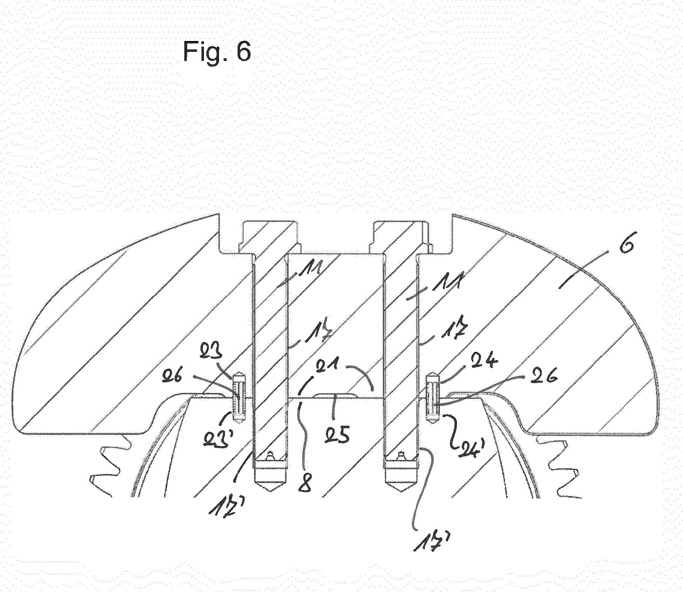

Ein Ausführungsbeispiel einer erfindungsgemäßen Verbindung mit der Kurbelwelle ist dagegen in Fig. 4 bis 6 gezeigt.

Gemäß einem ersten Aspekt der vorliegenden Erfindung ist die Anlagefläche 20 erfindungsgemäß in zwei voneinander getrennte Anlagebereiche 21 und 22 aufgeteilt, welche jeweils einer der Bohrungen 17 für die Schrauben zugeordnet sind. Insbesondere ist daher der erste Anlagebereiche 21 der einen Schraube zugeordnet, der zweite Anlagebereich 22 der anderen Schraube.

Insbesondere umgeben die Anlagebereiche 21 und 22 jeweils eine der beiden Bohrungen 17. Zwischen den beiden Anlagebereichen 21 und 22 ist ein Bereich 25 vorgesehen, in welchem das Gegengewicht nicht an der Gegenanlagefläche aufliegt.

Im Ausführungsbeispiel ist das Gegengewicht als Guss- und/oder Schmiedeteil ausgeführt. Die Anlagebereiche 21 und 22 werden spanend gefertigt. Gussmarken 19 der Gussform für die Gegengewichte sind dabei in den Figuren erkennbar.

Die Anlagebereiche 21 und 22 weisen eine in etwa quadratische Grundform auf, in deren Mitte die jeweilige Bohrung 17 angeordnet ist. Hierdurch ergibt sich eine gegenüber der zusammenhängenden, erheblich größeren Anlagefläche 20 gemäß dem Stand der Technik eine erheblich konzentriertere Kraftübertragung zwischen Gegengewicht und Kurbelwelle beziehungsweise Kurbelwange, durch welche ein Verkanten und Ungenauigkeiten bei der Auflage vermieden werden.

Im Ausführungsbeispiel erstrecken sich die beiden Anlagebereiche 21 und 22 über die gesamte axiale Breite des Gegengewichtes und können hierdurch relativ einfach durch spanende Bearbeitung dieses Bereiches des Gegengewichtes gefertigt werden. Das Rohteil weist daher im Bereich der Anlagebereiche 21 und 22 gegenüber dem dazwischenliegenden Bereich 25 und gegenüber den außenliegenden Bereichen einen erhabenen Bereich auf, dessen Höhe durch die spanende Bearbeitung verringert, jedoch nicht auf null herabgesetzt wird.

Die Gegenanlagefläche 8 an der Kurbelwelle beziehungsweise Kurbelwange ist im Ausführungsbeispiel weiterhin zusammenhängend gefertigt, könnte jedoch ebenfalls zwei separate Bereiche aufweisen, welche den beiden Anlagebereichen 21 und 22 entsprächen.

Gemäß einem zweiten Aspekt der vorliegenden Erfindung erfolgt die Positionierung der Gegengewichte an der Kurbelwelle beziehungsweise Kurbelwange über Positionierbohrungen 23 und 24, welche separat zu den Bohrungen 17 für die Verschraubung im Gegengewicht vorgesehen sind.

In die Bohrungen 23 und 24 greifen Positionierstifte 26 ein, welche die Gegengewichte an der Kurbelwelle beziehungsweise Kurbelwange positionieren.

Die Achsen der Positionierbohrungen 23 und 24 beziehungsweise Positionierstifte 26 verlaufen parallel zu den Achsen der Bohrungen 17 für die Verschraubung.

Im Ausführungsbeispiel ist eine erste Positionierbohrung 23 in einer Ebene angeordnet, welche durch die Mittelachsen der beiden Bohrungen 17 für die Verschraubungen definiert wird. Die zweite Positionierbohrung 24 ist gegenüber dieser Ebene dagegen seitlich verschoben. Die durch die beiden Bohrungen 17 definierte Ebene kann dabei eine Mittelebene des Gegengewichtes in axialer Richtung bilden, kann gegenüber einer solchen Mitteleben jedoch auch leicht verschoben sein.

Die Positionierbohrungen 23 und 24 und die entsprechenden Positionierelemente 26 liegen weiter auseinander als die Bohrungen 17 für die Verschraubungen. Insbesondere liegen sie dabei jeweils in Umfangsrichtung seitlich neben den Bohrungen 17 für die Verschraubungen.

In der Gegenanlagefläche 8 der Kurbelwelle bzw. Kurbelwange sind Bohrungen 17' vorgesehen, in welche die Schrauben 17 eingeschraubt werden, und welche mit den Bohrungen 17 des Gegengewichtes fluchten.

Weiterhin sind in der Gegenanlagefläche 8 Positionierbohrungen 23' und 24' vorgesehen, welche mit den Positionierbohrungen 23 und 24 des Gegengewichtes fluchten und in welche die Positionierstifte 26 eingreifen. Die Positionierbohrungen 23' und 24' sind damit ebenfalls separat zu den Bohrungen 17' für die Verschraubung vorgesehen und von diesen beabstandet.

Die Positionierstifte sind mit ihrem Außenumfang in die Positionierbohrungen 23, 23' bzw. 24, 24' eingepresst. Im Ausführungsbeispiel handelt es sich bei den Positionierstiften 26 um massive, kreiszylinderförmige Elemente.

Die beiden Aspekte der vorliegenden Erfindung könnten auch unabhängig voneinander eingesetzt werden. Insbesondere könnten die getrennten Anlagebereiche auch mit eine Positionierung über Positionierhülsen, wie sie aus dem Stand der Technik bekannt sind, eingesetzt werden. Weiterhin könnten die Positionierelemente gemäß dem zweiten Aspekt auch bei einer zusammenhängenden Anlagefläche, wie sie im Stand der Technik eingesetzt wurde, zum Einsatz kommen. Insbesondere könnten die Positionierelemente innerhalb einer solchen zusammenhängenden Anlagefläche angeordnet sein, und insbesondere die Positionierbohrungen in diese eingebracht sein.

Bevorzugt werden jedoch beide Aspekte kombiniert, wie dies auch beim Ausführungsbeispiel der Fall ist.

Im Ausführungsbeispiel sind die Positionierbohrungen jeweils in die Anlagebereiche 21 und 22 eingebracht und sind daher jeweils von diesen umgeben. Konkret ist dabei die Positionierbohrung 23 im Bereich des Anlagebereiches 21 angeordnet, die Positionierbohrung 24 im Bereich des Anlagebereichs 22. Anders ausgedrückt ist im Bereich des Anlagebereichs 21 die eine Bohrung 17 für eine der beiden Verschraubungen sowie die Positionierbohrung 23 angeordnet, im Bereich des Anlagebereichs 22 die andere Bohrung 17 für die andere Verschraubung und die zweite Positionierbohrung 24. Die Positionierstifte, welche in die Positionierbohrungen eingreifen, sind im Bereich der Gegenanlagefläche angeordnet.

Wie oben beschrieben können die Positionen der Positionierbohrungen und Positionierstifte in einem alternativen Ausführungsbeispiel gegenüber dem gezeigten Ausführungsbeispiel vertauscht sein.

Die Bohrungen 17 gehen wie oben beschrieben durch das Gegengewicht hindurch, so dass die Schraubenköpfe im Bereich der Aussparung 10 aufliegen und das Gegengewicht durch die durch das Gegengewicht hindurchgehenden Schrauben starr mit der Kurbelwelle verbunden wird.

Bei den Positionierbohrungen 23, 23' bzw. 24, 24' handelt es sich dagegen im Ausführungsbeispiel um Sacklöcher. Ebenso sind die Bohrungen 17' in der Kurbelwelle bzw. Kurbelwange für die Schrauben als Sacklöcher ausgeführt.

In einer möglichen Ausgestaltung der vorliegenden Erfindung können die Gegengewichte und die Kurbelwelle maßstabsgetreu so ausgeführt werden, wie dies in den Zeichnungen dargestellt ist. Sämtliche geometrischen Verhältnisse, welche in den Figuren gezeigt sind, können daher in exakt der dargestellten Form umgesetzt werden. Insbesondere können dabei auch die Krümmungsradien und spezifischen Formen, wie sie in den Figuren dargestellt werden, in genau dieser Form umgesetzt werden. Gleiches gilt für die relative Positionierung und Größe der jeweiligen Elemente.

In alternativen Ausgestaltungen der vorliegenden Erfindungen können die Zeichnungen jedoch auch lediglich als schematische Grundlage zur Ausgestaltung der Kurbelwelle und der Gegengewichte dienen, und andere als in den Zeichnungen dargestellte konkrete Formen, Abmessungen und Verhältnisse gewählt werden.

Weiterhin kann die vorliegende Erfindung auch unabhängig von der in den Zeichnungen gezeigten Form der Gegengewichte zum Einsatz kommen.

Die vorliegende Erfindung und die beschriebene Kurbelwelle können bei beliebigen Verbrennungsmotoren zum Einsatz kommen.

Beispielsweise kann die vorliegende Erfindung dabei bei V-Motoren zum Einsatz kommen. Insbesondere können bei einer solchen Ausführungsform die Pleuel zweier Zylinder eines V-Segmentes an einem Kurbelzapfen gelagert sein.

Die Anordnung der Kurbeln an der Kurbelwelle kann dabei symmetrisch bezüglich einer Mittelebene der Kurbel erfolgen oder asymmetrisch.

Die vorliegende Erfindung kann insbesondere bei größeren Motoren zum Einsatz kommen, beispielsweise bei Motoren mit mindestens 12 Zylindern. Insbesondere kann die vorliegende Erfindung dabei bei Motoren mit 12 Zylindern, 16 Zylindern oder 20 Zylindern zum Einsatz kommen. Insbesondere sind diese Motoren als V-Motoren ausgestaltet.

Bei dem Motor kann es sich beispielweise um einen Dieselmotor oder um einen Gasmotor handeln.

Der Motor kann zum Antrieb von mobilen oder stationären Maschinen eingesetzt werden, beispielsweise zum Antrieb von Erdbewegungsmaschinen wie Baggern oder Dumper Trucks oder für stationäre Anwendungen wie beispielsweise für Motor-Generator-Einheiten zur Erzeugung von elektrischem Strom.

## Patentansprüche

1. Kurbelwelle mit mindestens einem Gegengewicht, welches mit der Kurbelwelle bevorzugt über mindestens zwei Schrauben verschraubt ist, wobei das Gegengewicht eine Anlagefläche aufweist, mit welcher es an einer Gegenanlagefläche der Kurbelwelle anliegt,
**dadurch gekennzeichnet,**
**dass** die Position des Gegengewichtes an der Kurbelwelle über mindestens ein von der Verschraubung unabhängiges Positionierelement festgelegt ist.

2. Kurbelwelle nach Anspruch 1, wobei es sich bei dem Positionierelement um mindestens einen Positionierstift und eine zugehörige Positionieraussparung, in welche dieser eingreift, handelt.

3. Kurbelwelle nach Anspruch 1 oder 2, wobei das mindestens eine Positionierelement beabstandet zu der mindestens einen Verschraubung vorgesehen ist, wobei das Positionierelement bevorzugt in einer durch die Anlagefläche definierten Ebene beabstandet zu der oder den Schrauben und Bohrungen der Verschraubung angeordnet ist.

4. Kurbelwelle nach einem der vorangegangenen Ansprüche, wobei mindestens zwei Positionierelemente, insbesondere mindestens zwei Positionierstifte und zugehörige Positionieraussparungen vorgesehen sind.

5. Kurbelwelle nach einem der vorangegangenen Ansprüche, wobei der oder die Positionierstifte in miteinander fluchtende Positionieraussparungen, insbesondere Bohrungen, im Gegengewicht und in der Kurbelwelle bzw. Kurbelwange eingreifen und bevorzugt in diese eingepresst sind.

6. Kurbelwelle nach einem der vorangegangenen Ansprüche, wobei ein erstes Positionierelement, insbesondere ein erster Positionierstift in einer senkrecht zur Achse der Kurbelwelle verlaufenden Mittelebene des Gegengewichts und/oder in einer durch die Längsachsen zweier Schrauben aufgespannten Verschraubungsebene des Gegengewichts angeordnet ist.

7. Kurbelwelle nach einem der vorangegangenen Ansprüche, wobei ein zweites Positionierelement, insbesondere ein zweiter Positionierstift axial neben einer senkrecht zur Achse der Kurbelwelle verlaufenden Mittelebene des Gegengewichts und/oder einer durch die Längsachsen zweier Schrauben aufgespannten Verschraubungsebene des Gegengewichts angeordnet ist.

8. Kurbelwelle nach einem der vorangegangenen Ansprüche, wobei der oder die Positionierelemente, insbesondere Positionierstifte und/oder der oder die Positionieraussparungen, innerhalb der Gegenanlagefläche bzw. Anlagefläche angeordnet sind.

9. Kurbelwelle nach einem der vorangegangenen Ansprüche, wobei die Positionierelemente, insbesondere Positionierstifte und/oder Positionieraussparungen, jeweils einer Schraube zugeordnet sind und/oder weiter voneinander beabstandet als die Schrauben und bevorzugt jeweils bezüglich der Umfangsrichtung außen neben den Schrauben angeordnet sind.

10. Kurbelwelle nach einem der vorangegangenen Ansprüche, wobei die Anlagefläche mindestens zwei voneinander getrennte Anlagebereiche aufweist, welche jeweils einer der beiden Schrauben zugeordnet sind., wobei bevorzugt die Anlagebereiche jeweils eine der beiden Schrauben zumindest teilweise und bevorzugt komplett umgeben und/oder wobei die Schrauben jeweils im Wesentlichen in der Mitte eines der Anlagebereiche angeordnet sind.

11. Kurbelwelle nach einem der vorangegangenen Ansprüche, wobei sich die Anlagebereiche in einer gemeinsamen Ebene erstrecken und/oder symmetrisch bezüglich einer in axialer Richtung der Kurbelwelle verlaufenden Mittelebene des Gegengewichts angeordnet sind.

12. Kurbelwelle nach Anspruch 10 oder 11, wobei die Positionierelemente, insbesondere Positionierstifte oder die Positionieraussparungen, jeweils einem der Anlagebereiche, in welche die Anlagefläche aufgeteilt ist, zugeordnet und bevorzugt in diesem angeordnet sind.

13. Gegengewicht für eine Kurbelwelle nach einem der vorangegangenen Ansprüche.

14. Verbrennungsmotor mit einer Kurbelwelle nach einem der vorangegangenen Ansprüche, insbesondere Verbrennungsmotor mit mindestens 12 Zylindern und/oder V-Motor.

15. Maschine mit einem Verbrennungsmotor nach Anspruch 14, insbesondere mobile Maschine, insbesondere Erdbewegungsmaschine wie Bagger oder Muldenkipper, Schiff oder Eisenbahn oder stationäre Maschine, insbesondere Generatoreinheit zur Erzeugung von elektrischer Energie.
